# EUROPÄISCHE PATENTSCHRIFT

(11) **EP 0 412 145 B1**
(45) Veröffentlichungstag und Bekanntmachung des Hinweises auf die Patenterteilung: **18.11.1993**
(21) Anmeldenummer: 90903345.8
(22) Anmeldetag: 01.02.1990
(51) Int. Cl.: B60S 1/38

(54) **WISCHBLATT**
WIPER BLADE
RACLETTE D'ESSUIE-GLACE

(30) Priorität: 16.02.1989 DE 3904620
(43) Veröffentlichungstag der Anmeldung: 13.02.1991
(73) Patentinhaber: SWF Auto-Electric GmbH, D-74307 Bietigheim-Bissingen (DE)
(72) Erfinder: ROTH, Christian, D-7120 Bietigheim-Bissingen (DE); SCHOLL, Wolfgang, D-7121 Gemmrigheim (DE)
(74) Vertreter: Portwich, Peter
(86) Internationale Anmeldenummer: EP9000178
(87) Internationale Veröffentlichungsnummer: WO9009300

(56) Entgegenhaltungen:
- EP-A- 280 806
- EP-A- 281 397
- WO-A-88/00147
- FR-A- 2 415 563

## Beschreibung

Die Erfindung bezieht sich auf ein Wischblatt, insbesondere für Scheibenreinigungsanlagen an Kraftfahrzeugen, gemäß den Merkmalen des Oberbegriffs des Anspruchs 1.

Bei modernen Kraftfahrzeugen mit gewölbten Windschutzscheiben werden überwiegend Wiscblätter mit einem mehrteiligen Tragbügelsystem zur Führung einer Wischleiste verwendet. Zu dem Tragbügelsystem gehört meist ein übergeordneter Bügel, nämlich ein Hauptbügel, an dem schwenkbar zwei untergeordnete Bügel, nämlich Krallenbügel aufgehängt sind. Bei Wischblättern geringer Länge ist der untergeordnete Bügel über ein Kunststoffgelenkteil mit seitlich abstehenden Lagerzapfen am übergeordneten Bügel aufgehängt. Bei Wischblättern größerer Länge ist der untergeordnete Bügel mit dem übergeordneten Bügel über einen metallischen Nietzpafen verbunden (siehe z.B. EP-A-0 280 806). Beide Lösungen haben Vor- und Nachteile. Bei Verwendung eines Kunststoffgelenkteiles wird die gegenseitige Berührung der meist metallischen Bügel und damit eine störende Geräuschbildung vermieden. Allerdings enstprechen diese Ausführungen mit einem Kunststoffgelenkteil nicht immer den Stabilitätsanforderungen und ein unzulässig hohes Spiel kann nach längerer Betriebszeit nicht vermieden werden.

Die genieteten Wischblätter haben eine höhere Stabilität, jedoch entspricht das Korrosionsverhalten nicht allen Anforderungen. Bei diesen Wischblättern wird nämlich der Nietkopf durch eine Taumelnietung gebildet, damit durch die sich an den Nietkopf anschließende Verformung des Nietschaftes ein Preßsitz hergestellt wird und damit eine ausreichend feste Verbindung des Gelenknietes mit dem übergeordneten Bügel erreicht wird. Bei diesem Taumelnietvorgang wird jedoch manchmal die Lackschicht des übergeordneten Bügels beschädigt, so daß an dieser Stelle eine erhöhte Korrosion auftritt. Dadurch wird aber auch die Nietverbindung beeinträchtigt, so daß schließlich eine drehfeste Verbindung des Gelenknietes mit dem übergeordneten Bügel nicht mehr gewährleistet ist. Dies hat zur Folge, daß schließlich doch wieder die Durchbrüche in den Seitenwangen des übergeordneten Bügels ausgeschlagen werden und damit das Spiel in der Gelenkverbindung derart groß wird, daß eine ausreichende Wischwirkung nicht mehr erzielt wird.

Der vorliegenden Erfindung liegt nun die Aufgabe zugrunde, ein Wischblatt der eingangs erwähnten Art so weiterzubilden, daß die Gelenkverbindung zwischen einem übergeordneten Bügel und einem untergeordneten Bügel auch nach längerer Betriebszeit allen Anforderungen entspricht.

Diese Aufgabe wird erfindungsgemäß mit den kennzeichnenden Merkmalen des Anspruchs 1 gelöst.

Der vorliegenden Erfindung liegt dabei die überlegung zugrunde, daß man mit geringem Aufwand eine Verbindung zwischen den Bügeln schaffen kann, wenn man Elemente aus beiden Konstruktionsprinzipien sachgerecht miteinander kombiniert. Bei der erfindungsgemäßen Lösung wird also wiederum ein Gelenkstift verwendet, der allerdings im Gegensatz zu den bekannten Nietverbindungen nunmehr drehfest mit dem untergeordneten Bügel verbunden ist. Dieser Gelenkstift ragt in die Durchbrüche in den Seitenwangen im übergeordneten Bügel hinein und ist dort in einer separaten Lagerbuchse drehbar gelagert. Diese Lagerbuchsen werden vorzugsweise aus Kunststoff hergestellt, so daß eine metallische Berührung dieses Gelenkstiftes mit dem übergeordneten Bügel vermieden ist. Korrosionsschäden am übergeordneten Bügel sind daher nicht zu befürchten. Im Vergleich zu den bekannten Ausführungen mit einem Nietzapfen wird bei der erfindungsgemäßen Ausführung auch die wirksame Lagerlänge wesentlich vergößert. Während nämlich bei den bekannten Ausführungen Lagerflächen zwischen den Seitenwangen des untergeordneten Bügels und dem Gelenkzapfen gebildet sind, sind bei den erfindungsgemäßen Ausführungen die Lagerflächen in den Bereich der Seitenwangen des übergeordneten Bügels verlagert. Die Lagerflächen werden dadurch wesentlich geringer beansprucht, so daß mit einer längeren Lebensdauer zu rechnen ist.

Wenn der drehfest mit dem untergeordneten Bügel verbundene Gelenkstift in seiner Achsrichtung formstabil an diesem untergeordneten Bügel gehalten ist, kann man auf die Bildung von Nietköpfen verzichten. Bei der erfindungsgemäßen Ausführung kann man daher einen einfachen zylindrischen Gelenkstift verwenden, der in großen Stückzahlen beispielsweise als Lagernadel hergestellt wird. Derartige Lagernadeln haben eine ausreichende Stabilität und wegen ihrer Oberflächenbehandlung gute Gleiteigenschaften. Darüberhinaus ergibt sich bei dieser Konstruktion der wesentliche Vorteil, daß man keine Nietköpfe bilden muß und daher eine Beschädigung der Lackschicht an den Außenseiten der Seitenwangen des übergeordneten Bügels vermieden wird.

Die in den Durchbrüchen des übergeordneten Bügels drehfest mit diesen festgelegten Lagerbuchsen werden bei einer bevorzugten Ausführungsform der Erfindung einstückig an einem U-förmigen, zwischen den beiden Bügeln eingelegten Distanzstück angeordnet, so daß deren Montage kostengünstig durchgeführt werden kann. Durch dieses Distanzstück wird dabei in an sich bekannter Weise zugleich eine metallische Berührung zwischen den beiden Bügeln selbst vermieden.

Die Erfindung wird nachstehend anhand des in der Zeichnung dargestellten Ausführungsbeispiels näher erläutert.

Es zeigen:
- Fig. 1: eine Seitenansicht auf ein Wischblatt,
- Fig. 2: einen Schnitt durch die Gelenkstelle und
- Fig. 3: einen Schnitt durch einen untergeordneten Bügel.

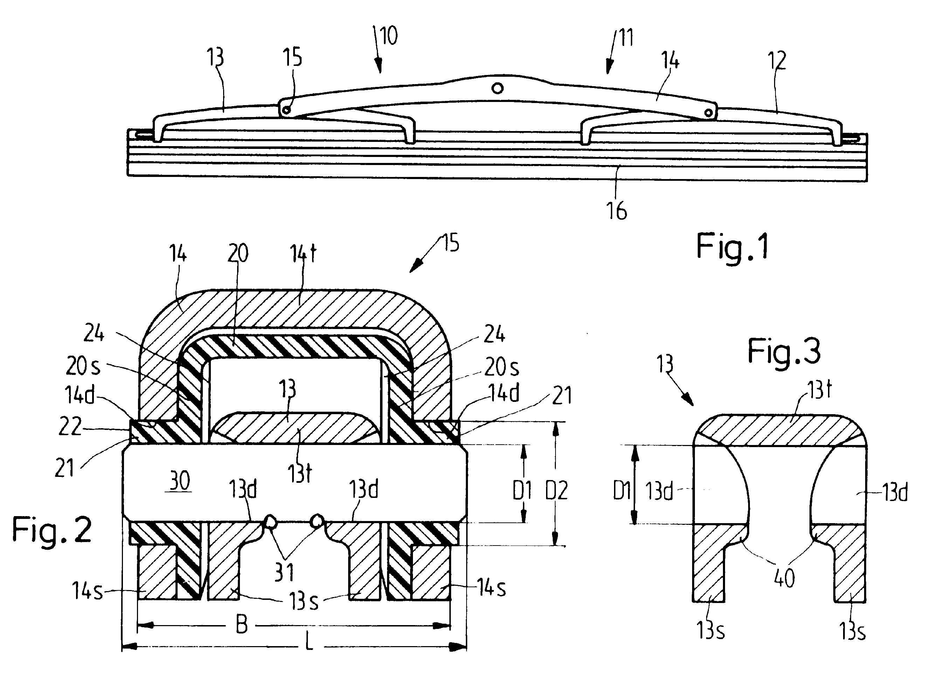

Fig. 1 zeigt ein Wischblatt 10 mit einem Tragbügelsystem 11, zu dem zwei Krallenbügel 12 und 13 und ein Hauptbügel 14 gehören. Die Krallenbügel 12, 13 können auch als untergeordnete Bügel bezeichnet werden, die über ein Gelenk 15 schwenkbar an dem übergeordneten Hauptbügel 14 angelenkt sind. Die Krallenbügel 12, 13 dienen in bekannter Weise zur Führung einer Gummiwischleiste 16.

Fig. 2 zeigt in vergrößertem Maßstab die Gelenkstelle 15 zwischen dem Krallenbügel 13 und dem Hauptbügel 14. Aus dieser Darstellung ist ersichtlich, daß die Bügel jeweils zwei parallel zueinander ausgerichtete Seitenwangen 13s, 14s sowie einen diese Seitenwangen verbindenden Steg 13t, 14t aufweisen. In die Seitenwangen 13s, 14s der Bügel, die einen insgesamt U-förmigen Querschnitt aufweisen, sind Durchbrüche 13d, 14d eingearbeitet. Fig. 2 zeigt, daß der untergeordnete Bügel 13 vom übergeordneten Bügel 14 derart übergriffen wird, daß diese Durchbrüche 13d, 14d in den Seitenwangen 13s, 14s koaxial zueinander ausgerichtet sind.

Zwischen dem untergeordneten Bügel 13 und dem übergeordneten Bügel 14 ist ein im Querschnitt ebenfalls U-förmiges Distanzstück 20 aus Kunststoff eingelegt, das an Seitenwänden 20s einstückig Lagerbuchsen 21 aufweist, die in die Durchbrüche 14d im übergeordneten Bügel 14 eingreifen. Die Stirnflächen 22 der Lagerbuchsen stehen geringfügig über die äußeren Seitenflächen der Seitenwangen 14s des übergeordneten Bügels vor. An der Innenseite sind an diese Seitenwände 20s des Distanzstückes 20 Rippen 24 angeformt, an denen die Seitenwangen 13s des untergeordneten Bügels 13 spielfrei anliegen.

Die beiden Bügel 13, 14 sind über einen insgesamt mit 30 bezeichneten Gelenkstift miteinander verbunden, der nach der koaxialen Ausrichtung der Durchbrüche 13d, 14d durch eine Lagerbuchse 21 hindurch eingesteckt ist. Wesentlich für die vorliegende Erfindung ist nun, daß dieser Gelenkstift 30 drehfest mit dem untergeordneten Bügel 13 verbunden ist. Dazu haben die Durchbrüche 13d in den Seitenwangen 13s des untergeordneten Bügels 13 einen Durchmessser D1, der geringfügig kleiner ist als der Durchmesser des Gelenkstiftes 30. Dieser Gelenkstift 30 ist folglich durch Preßsitz mit dem untergeordneten Bügel 13 drehfest verbunden. Zur axialen Lagesicherung können aus dem Gelenkstift 30 noch Vorsprünge 31 herausgerägt werden. Bei der erfindungsgemäßen Ausführung ist also der Gelenkstift 30 mit dem untergeordneten Bügel 13 drehfest verbunden und in Achsrichtung gegen Verschiebung gesichert. Die Lagerbuchsen 21 für den sich mit dem untergeordneten Bügel 13 drehenden Gelenkstift 30 sind drehfest in den Durchbrüchen 14d im übergeordneten Bügel 14 festgelegt. Die bei einer Schwenkbewegung zwischen untergeordnetem und übergeordnetem Bügel beanspruchten Lagerflächen liegen also im Bereich dieser Gelenkbuchsen 21, so daß die wirksame Lagerlänge bei der Ausführung nach Fig. 2 größer ist als bei den bekannten genieteten Wischblättern, bei denen die Relativbewegung zwischen dem untergeordnetem Bügel und dem Gelenkniet stattfindet.

Aus Fig. 2 ist erkennbar, daß der Gelenkstift 30 einen durchgehend gleichen Querschnitt aufweist. Bei einer solchen Ausführung muß dann natürlich der Durchmesser D2 in den Seitenwangen des übergeordneten Bügels zwangsläufig größer sein als der Durchmessser der Durchbrüche in den Seitenwangen des untergeordneten Bügels, damit ausreichend Raum zur Aufnahme der Lagerbuchse 21 geschaffen ist. Aus Fig. 2 geht hervor, daß die Länge L des Gelenkstiftes geringfügig größer ist als die Breite B des übergeordneten Bügels. Damit steht dieser Gelenkstift geringfügig über die Seitenwände 14s des übergeordneten Bügels 14 vor. Auf diese Weise wird vermieden, daß beim Eintreiben dieses Gelenkstiftes in die Durchbrüche des untergeordneten Bügels durch das Werkzeug die Seitenwangen 14s beschädigt werden. Aus demselben Grund stehen die Lagerbuchsen 21 geringfügig über diese Seitenwangen 14s vor.

Insbesondere aus Fig. 3 geht noch hervor, daß vom Rand der Durchbrüche 13d am untergeordneten Bügel 13 abschnittsweise ein Kragen 40 vorsteht, so daß die Preßsitzfläche für den Gelenkstift 30 vergrößert ist. Dieser Gelenkstift 30 liegt dabei unmittelbar an der unteren Fläche des Steges 13t an, was aus Fig. 2 deutlich hervorgeht. Auf diese Weise ergibt sich eine raumsparende Bauform mit einwandfreier drehfester Verbindung zwischen dem Gelenkstift 30 und dem untergeordneten Bügel 13. Der über seine gesamte Länge zylindrische Gelenkstift 30 wird vorzugsweise aus Chromstahl hergestellt, weil dieser Werkstoff eine ausreichende Stabilität bei guten Gleiteigenschaften verspricht. Das Distanzstück 20 wird in bekannter Weise aus einem Kunststoff mit guten Gleiteigenschaften gespritzt, so daß mit einer langer Lebensdauer der Gelenkverbindung ohne wesentliches Spiel gerechnet werden kann. Da der Gelenkstift 30 wegen des fehlenden Nietkopfes den übergeordneten Bügel nicht berührt, tritt an den Außenseiten des übergeordneten Bügels 14 auch keine Korrosion auf. An der Berührungstelle zwischen dem untergeordneten Bügel und dem Gelenkstift könnte zwar eine Korrosion auftreten, jedoch ist hier die Korrosionsneigung gering, weil dieser Bereich durch den übergeordneten Bügel geschützt ist. Eine Korrosion wirkt sich außerdem nicht entscheidend auf das Wischverhalten aus, da sie an einer Stelle auftritt, an der ein Preßsitz, und keine Lagerung vorgesehen ist. Selbstverständlich könnte man - etwa durch Kunststoffbeschichtung des Gelenkstiftes 30 - eine metallische Berührung auch mit dem untergeordneten Bügel verhindern. Aus Kostengründen wird man in der Regel aber davon absehen.

## Patentansprüche

1. Wischblatt, insbesondere für Scheibenreinigungsanlagen an Kraftfahrzeugen mit einem zur Führung einer Wischleiste dienenden mehrteiligen Tragbügelsystem (11) mit einem übergeordneten Bügel (14) und einem daran schwenkbar aufgehängten untergeordneten Bügel (13), die jeweils einen wenigstens annährend U-förmigen Querschnitt mit parallel zueinander ausgerichteten Seitenwangen (13s,14s) und einem diese Seitenwangen verbindenden Steg (13t,14t) aufweisen, wobei der übergeordnete Bügel (14) den untergeordneten Bügel (13) derart übergreift, daß in den Seitenwangen (13s,14s) der Bügel zur Aufnahme eines Gelenkstiftes (30) vorgesehene Durchbrüche (13d,14d) koaxial zueinander ausgerichtet sind, dadurch gekennzeichnet, daß der Gelenkstift (30) drehfest mit dem untergeordneten Bügel (13) verbunden ist und mit seinen Endbereichen drehbar in Lagerbuchsen (21) gelagert ist, die drehfest in den Durchbrüchen (14d) des übergeordneten Bügels (14) festgelegt sind.

2. Wischblatt nach Anspruch 1, dadurch gekennzeichnet, daß der Gelenkstift (30) in Achsrichtung gesichert am untergeordneten Bügel (13) festgelegt ist.

3. Wischblatt nach Anspruch 2, dadurch gekennzeichnet, daß der Gelenkstift (30) in den Durchbrüchen (13d) des untergeordneten Bügels (13) eingepreßt ist.

4. Wischblatt nach Anspruch 3, dadurch gekennzeichnet, daß vom Rand der Durchbrüche (13d) wenigstens abschnittsweise ein Kragen (40) absteht.

5. Wischblatt nach Anspruch 3 oder 4, dadurch gekennzeichnet, daß zur axialen Sicherung des Gelenkstiftes (30) am untergeordneten Bügel (13) aus dem Gelenkstift (30) Vorsprünge (31) herausgeprägt sind.

6. Wischblatt nach wenigstens einem der vorhergehenden Ansprüche, dadurch gekennzeichnet, daß der Gelenkstift (30) einen durchgehend gleichen Querschnitt aufweist und daß der Durchmesser (D2) der Durchbrüche (14d) in den Seitenwangen (14s) des übergeordneten Bügels (14) größer ist als der Durchmesser (D1) der Durchbrüche (13d) in den Seitenwangen (13) des untergeordneten (13) Bügels.

7. Wischblatt nach wenigstens einem der vorhergehenden Ansprüche, dadurch gekennzeichnet, daß die Länge (L) des Gelenkstiftes (30) geringfügig größer ist als die Breite des übergeordneten Bügels (14).

8. Wischblatt nach wenigstens einem der vorhergehenden Ansprüche, dadurch gekennzeichnet, daß der Gelenkstift (30) aus Stahl, insbesondere Chromstahl hergestellt ist.

9. Wischblatt nach wenigstens einem der vorhergehenden Ansprüche, dadurch gekennzeichnet, daß die Lagerbuchsen (21) von der Seite des untergeordneten Bügels (13) her in die Durchbrüche (14d) des übergeordneten Bügels (14) eintauchen.

10. Wischblatt nach Anspruch 9, dadurch gekennzeichnet, daß die beiden Lagerbuchsen (21) einstückig an einem U-förmigen zwischen den beiden Bügeln (13,14) eingelegten Distanzstück (20) angeordnet sind.

11. Wischblatt nach Anspruch 10, dadurch gekennzeichnet, daß die Stirnflächen der Lagerbuchsen (21) geringfügig über die äußeren Seitenflächen der Seitenwangen (14s) des übergeordneten Bügels (14) vorstehen.

12. Wischblatt nach Anspruch 10, dadurch gekennzeichnet, daß das Distanzstück (20) aus einem Kunststoff mit guten Gleiteigenschaften hergestellt ist.

13. Wischblatt nach Anspruch 10, dadurch gekennzeichnet, daß die Stirnflächen des Gelenkstiftes (30) geringfügig über die Stirnflächen der Lagerbuchse (21) vorstehen.

## Claims

1. A wiper blade, especially for windshield wiper systems of motor vehicles with a carrier yoke system (1) of several parts for guiding a rubber element, which carrier yoke system (1) comprises a primary yoke (14) and a secondary yoke (13) swivellably mounted thereto, which yokes have an at least approximately U-shaped cross-section with side walls (13s, 14s) parallelly arranged to each other and comprise a web (13t, 14t) connecting these side walls, whereby the primary yoke (14) extends the secondary yoke (13) in such a way that in the side walls (13s, 14s) of the yokes apertures (13d, 14d) provided for receiving a pivot pin (30) are coaxially arranged to each other, wherein the pivot pin (30) is non-rotatably connected with the secondary yoke (13) and is rotatably mounted in the bearing bushes (21) by way of its ends, which bearing bushes (21) are non-rotatably fixed in the apertures (14d) of the primary yoke (14).

2. A wiper blade according to claim 1, wherein the pivot pin (30) is - protected in axial direction - fixed onto the secondary yoke (13).

3. A wiper blade according to claim 2, wherein the pivot pin (30) is pressed into the apertures (13d) of the secondary yoke (13).

4. A wiper blade according to claim 3, wherein at least in sections a collar (40) sticks out of the edge of the apertures (13d).

5. A wiper blade according to claim 3 or 4, wherein for securing the pivot pin (30) axially on the secondary yoke (13) projections (31) are punched out of the pivot pin (30).

6. A wiper blade according to at least one of the preceding claims, wherein the pivot pin (30) is of continually the same cross-section and wherein the diameter (D2) of the apertures (14d) in the side walls (14s) of the primary yoke (14) is bigger than the diameter (D1) of the apertures (13d) in the side walls (13) of the secondary yoke (13).

7. A wiper blade according to at least one of the preceding claims, wherein the length (L) of the pivot pin (30) is slightly bigger than the width of the primary yoke (14).

8. A wiper blade according to at least one of the preceding claims, wherein the pivot pin (30) is made of steel, especially of chrome steel.

9. A wiper blade according to at least one of the preceding claims, wherein the bearing bushes (21) engage into the apertures (14d) of the primary yoke (14) from the side of the secondary yoke (13).

10. A wiper blade according to claim 9, wherein the two bearing bushes (21) are integrally arranged on a U-shaped distance member (20) inserted between the two yokes (13, 14).

11. A wiper blade according to claim 10, wherein the transverse sides of the bearing bushes (21) slightly project the outer sides of the side walls (14s) of the primary yoke (14).

12. A wiper blade according to claim 10, wherein the distance member (20) is made of plastics with good gliding qualities.

13. A wiper blade according to claim 10, wherein the transverse sides of the pivot pin (30) slightly project the transverse sides of the bearing bush (21).

## Revendications

1. Balai d'essuie-glace, notamment pour des installations de nettoyage des vitres dans des véhicules automobiles, comportant un système à étriers de support (11) constitué de plusieurs éléments et servant à guider une raclette et sur lequel est superposé un étrier supérieur (14) et un étrier inférieur (13), qui est suspendu à l'étrier précédent de manière à pouvoir pivoter, ces étriers possédant respectivement une section transversale au moins approximativement en forme de U comportant des parois latérales parallèles (13s, 14s) et une barrette (13t, 14t) reliant ces parois latérales et dans lequel l'étrier supérieur (14) s'engage par-dessus l'étrier inférieur (13) de telle sorte que des passages (13d, 14d) prévus dans les parois latérales (13s, 14s) des étriers pour loger une tige d'articulation (30), sont coaxiaux l'un à l'autre, caractérisé en ce que la tige d'articulation (30) est raccordée, avec blocage en rotation, à l'étrier inférieur (13) et est montée par ses parties d'extrémité, de manière à pouvoir tourner, dans des coussinets (21), qui sont fixés, avec blocage en rotation, dans les passages (14d) de l'étrier supérieur (14).

2. Balai d'essuie-glace selon la revendication 1, caractérisé en ce que la tige d'articulation (30) est fixée en étant bloquée dans la direction axiale sur l'étrier inférieur (13).

3. Balai d'essuie-glace selon la revendication 2, caractérisé en ce que la tige d'articulation (30) est insérée à force dans les passages (13d) de l'étrier inférieur (13).

4. Balai d'essuie-glace selon la revendication 3, caractérisé en ce qu'un collet (40) fait saillie, au moins par endroits, sur le bord des passages (13d).

5. Balai d'essuie-glace selon la revendication 3 ou 4, caractérisé en ce que des parties saillantes (31) sont ressorties à partir de la tige d'articulation (30) pour réaliser le blocage axial de la tige d'articulation (30) sur l'étrier inférieur (13).

6. Balai d'essuie-glace selon au moins l'une des revendications précédentes, caractérisé en ce que la tige d'articulation (30) possède une section transversale identique sur toute sa longueur et que le diamètre (D2) des passages (14d) ménagés dans les parois latérales (14s) de l'étrier supérieur (14) est supérieur au diamètre (D) des passages (13d) ménagés dans les parois latérales (13s) de l'étrier inférieur (13).

7. Balai d'essuie-glace selon au moins l'une des revendications précédentes, caractérisé en ce que la longueur (L) de la tige d'articulation (30) est légèrement supérieure à la largeur de l'étrier supérieur (14).

8. Balai d'essuie-glace selon au moins l'une des revendications précédentes, caractérisé en ce que la tige d'articulation (30) est réalisée en acier, notamment en acier au chrome.

9. Balai d'essuie-glace selon au moins l'une des revendications précédentes, caractérisé en ce que les coussinets (21) pénètrent, à partir des côtés de l'étrier inférieur (13), dans les passages (14d) de l'étrier supérieur (14).

10. Balai d'essuie-glace selon la revendication 9, caractérisé en ce que les deux coussinets (21) sont disposés d'un seul tenant sur un bloc entretoise en forme de U (20) inséré entre les deux étriers (13,14).

11. Balai d'essuie-glace selon la revendication 10, caractérisé en ce que les surfaces frontales des coussinets (29) font légèrement saillie au-delà des surfaces latérales extérieures des parois latérales (14s) de l'étrier supérieur (14).

12. Balai d'essuie-glace selon la revendication 10, caractérisé en ce que le bloc-entretoise (20) est réalisé en une matière plastique possédant de bonnes propriétés de glissement.

13. Balai d'essuie-glace selon la revendication 10, caractérisé en ce que les surfaces frontales de la tige d'articulation (30) font légèrement saillie sur les surfaces frontales du coussinet (21).
